(19) Europäisches Patentamt
European Patent Office
Office européen des brevets

(11) **EP 4 277 122 B1**

(12) **FASCICULE DE BREVET EUROPEEN**

(45) Date de publication et mention
de la délivrance du brevet:
**27.11.2024   Bulletin 2024/48**

(21) Numéro de dépôt: **23172315.6**

(22) Date de dépôt: **09.05.2023**

(51) Classification Internationale des Brevets (IPC):
***H02S 50/10*** *(2014.01)*

(52) Classification Coopérative des Brevets (CPC):
**H02S 50/10**

(54) **PROCÉDÉ ET DISPOSITIF DE DÉTERMINATION DE PERTE DE PUISSANCE D'UN ENSEMBLE PHOTOVOLTAIQUE PLAN**

VERFAHREN UND VORRICHTUNG ZUR BESTIMMUNG DER VERLUSTE EINER PLANAREN PHOTOVOLTAIK-ANORDNUNG

METHOD AND DEVICE FOR DETERMINING THE POWER LOSS OF A PLANAR PHOTOVOLTAIC ARRAY

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **10.05.2022   FR 2204435**

(43) Date de publication de la demande:
**15.11.2023   Bulletin 2023/46**

(73) Titulaire: **Commissariat à l'Energie Atomique et aux Energies Alternatives**
**75015 Paris (FR)**

(72) Inventeurs:
• **HA, Duy Long**
**38054 GRENOBLE CEDEX 9 (FR)**
• **MELLITI, Dhiaeddine**
**38054 GRENOBLE CEDEX 9 (FR)**

(74) Mandataire: **Lavoix**
**2, place d'Estienne d'Orves**
**75441 Paris Cedex 09 (FR)**

(56) Documents cités:
**EP-A1- 3 300 249     WO-A1-2021/188051**

**Description**

La présente invention concerne un procédé de détermination de perte de puissance d'un ensemble photovoltaïque plan comprenant une ou plusieurs chaînes de modules photovoltaïques, chaque chaîne comprenant au moins un module photovoltaïque, les chaînes étant connectées en série et/ou en parallèle entre une borne positive et une borne négative.

L'invention concerne également un programme d'ordinateur comportant des instructions logicielles qui, lorsqu'elles sont exécutées par un ordinateur, mettent en oeuvre un tel procédé de détermination de perte de puissance d'un ensemble photovoltaïque plan.

L'invention concerne également un dispositif électronique de détermination de perte de puissance d'un ensemble photovoltaïque plan comprenant une ou plusieurs chaînes de modules photovoltaïques, chaque chaîne comprenant au moins un module photovoltaïque, les chaînes étant connectées en série et/ou en parallèle entre une borne positive et une borne négative.

L'invention se situe dans le domaine de la production d'électricité par des installations photovoltaïques, notamment pour le photovoltaïques intégré au bâtiment BIPV (de l'anglais Building Integrated Photovoltaïcs), et plus particulièrement dans le domaine de la surveillance du bon fonctionnement de telles installations, dont un exemple de surveillance est décrit dans le document EP 3 300 249 A1 portant sur un procédé de surveillance et de diagnostic d'une architecture photovoltaïque et la détection de défaut au sein d'une telle architecture photovoltaïque.

De manière connue, les installations photovoltaïques (également appelées centrales photovoltaïques par la suite) comprennent une ou plusieurs chaînes de modules photovoltaïques, chaque chaîne comprenant un ensemble de modules photovoltaïques, pouvant se réduire à un seul module photovoltaïque, les chaînes étant connectées en série et/ou en parallèle entre une borne positive et une borne négative, chaque module étant composé d'au moins une cellule photovoltaïque, en général une matrice de cellules, chaque cellule étant une unité configurée pour produire un courant électrique à partir de l'énergie lumineuse. Une telle installation est adaptée pour alimenter en énergie électrique une charge, par exemple un onduleur adapté pour générer des tensions et des courants alternatifs à partir d'une source produisant un courant électrique continu, relié à un réseau électrique alternatif.

Un des problèmes qui se pose dans ce type de centrale photovoltaïque est la perte de puissance électrique produite relative à l'occurrence d'un ou plusieurs module(s) photovoltaïque(s) défectueux.

Pour estimer une telle perte, on compare classiquement la température des modules en défaut à celle de ceux qui sont sains, la perte de puissance étant proportionnelle à la différence de température issue d'une telle comparaison. Autrement dit, en considérant deux modules photovoltaïques M1 et M2 avec une surface utile $A$ et un coefficient d'échange thermique $U_{pv}$, la relation classique entre, d'une part la différence de puissance électrique $P_{elec}$ entre les deux modules, et d'autre part la différence de température $T_c$ entre les deux modules est exprimée selon la relation suivante :

$$P_{elec}(M2) - P_{elec}(M1) = U_{pv}A\big(T_c(M1) - T_c(M2)\big)$$

en supposant classiquement que deux modules photovoltaïques M1 et M2 ayant la même température produisent la même quantité d'énergie, et dès lors que l'un des modules présente un défaut, sa température sera plus élevée, ce qui engendre par la suite une dégradation de sa puissance électrique.

Toutefois, en pratique, la difficulté inhérente à cette technique classique est de déterminer quel module photovoltaïque de l'installation considérée, correspondant à un ensemble photovoltaïque PV plan, est le plus sain pour servir de référence lors de ladite comparaison.

On connaît des méthodes de modélisation de température de surface d'un ensemble photovoltaïque plan tel que le modèle Sandia notamment décrit via l'URL suivante :https://pvpmc.sandia.gov/modeling-steps/2-dc-module-iv/module-temperature/sandia-module-temperature-model/, ou selon l'approche décrite par D. Faiman dans la publication intitulée « Assessing the Outdoor Operating Température of Photovoltaic Modules », Prog. Photovolt. Res. Appl., vol. 16, p. 307-315, juin 2008, doi: 10.1002/pip.813, ou encore par M. Mattei et al. dans la publication intitulée « Calculation of the polycrystalline PV module température using a simple method of energy balance » Renewable Energy 31, no. 4 (April 2006): 553-67. https://doi.org/10.1016/j.renene.2005.03.010.

Ces méthodes proposent chacune un modèle pour estimer la température ambiante d'un ensemble photovoltaïque plan en tenant compte des paramètres météorologiques du site, à savoir son rayonnement solaire, le vent, etc., et les conditions de montage des modules photovoltaïques. Cependant, ces modèles proposent de manière théorique une seule température de référence pour tout la surface de l'ensemble photovoltaïque plan, ce qui n'est pas conforme à la réalité terrain dans la mesure où cette température varie dans l'espace en différents point de cette surface.

En effet, pour un ensemble photovoltaïque plan BIPV, les conditions de montage des modules photovoltaïques impliquent que l'ensemble photovoltaïque plan n'est pas exposé à la même température ambiante et surtout au vent d'une manière uniforme, ce qui engendre notamment des gradients thermiques entre le centre et les extrémités de l'ensemble photovoltaïque plan. Par ailleurs, la présence de ponts thermiques dans la structure d'intégration influence aussi la température des modules dans les zones en question.

D'autres approches, telles que notamment décrites par Y. Assoa et al. dans la publication intitulée « Thermal analysis of a BIPV system by various modelling approaches » de 2017, ou encore par H. Getu et al. dans la publication intitulée « Computational Fluid Dynamics (CFD) Analysis of Air Based Building Integrated Photovoltaic Thermal (BIPV/T) Systems for Efficient Performance » de 2014, utilisent une modélisation en éléments finis avec des modèles physiques de propagation de chaleur pour estimer la température de surface des modules photovoltaïques. Néanmoins ces approches sont couteuses car nécessitant des outils spécifiques, complexes et gourmandes en temps et en calculs.

Par conséquent, il existe un besoin spécifique d'améliorer la modélisation de la température de surface d'un ensemble photovoltaïque plan, afin d'en améliorer ensuite la détermination de perte de puissance.

A cet effet, l'invention a pour objet un procédé de détermination de perte de puissance d'un ensemble photovoltaïque plan comprenant une ou plusieurs chaînes de modules photovoltaïques, chaque chaîne comprenant au moins un module photovoltaïque, les chaînes étant connectées en série et/ou en parallèle entre une borne positive et une borne négative, le procédé étant mis en oeuvre par un dispositif électronique de détermination de perte de puissance d'un ensemble photovoltaïque plan, et comprenant les étapes suivantes, pour un état courant dudit ensemble photovoltaïque plan :

- détection de la présence ou absence de défaut au sein de chaque module photovoltaïque dudit ensemble photovoltaïque ;
- en fonction du résultat de ladite détection, formation de deux groupes de modules photovoltaïques comprenant un premier groupe G de module(s) photovoltaïque(s) sain(s) dépourvu(s) de défaut et un deuxième groupe D de module(s) photovoltaïque(s) défectueux,
- pour chaque module(s) photovoltaïque(s) sain(s) dudit premier groupe G, estimation de l'irradiance $G_{estime}$ et de la température ambiante associée audit module photovoltaïque sain considéré en fonction de données météorologiques et/ou satellites;
- estimation de la température de surface de référence dudit ensemble photovoltaïque via un modèle polynomial bidimensionnel prédéterminé, dont les deux ordres respectivement associés à chaque direction du plan considéré dudit ensemble photovoltaïque plan, minimisent simultanément un critère d'erreur quadratique moyenne utilisant la température mesurée de chaque module(s) photovoltaïque(s) sain(s) dudit premier groupe ;
- pour chaque module(s) photovoltaïque(s) défectueux dudit deuxième groupe, recherche d'un nombre prédéterminé $N_{voisin}$ de module(s) photovoltaïque(s) sain(s) voisins les plus proches en distance physique dudit module photovoltaïque défectueux considéré ;
- détermination de la perte de puissance associée à ou auxdits module(s) photovoltaïque(s) défectueux en utilisant, pour chaque module(s) photovoltaïque(s) défectueux dudit deuxième groupe D :

  - la température mesurée dudit module photovoltaïque défectueux considéré ;
  - la température de surface de référence estimée via ledit modèle polynomial prédéterminé obtenue en utilisant lesdits module(s) photovoltaïque(s) sain(s) voisins dudit module photovoltaïque défectueux considéré ;

- l'irradiance estimée associée audit module photovoltaïque défectueux en utilisant les module(s) photovoltaïque(s) sain(s) voisins.

Ce procédé vise ainsi à tirer profit de la température des modules photovoltaïques sains détectés sur l'ensemble photovoltaïque plan pour reproduire le profil de température de surface normale d'un tel ensemble photovoltaïque plan considéré en tenant compte des gradients et ponts thermique existant.

Plus précisément, on obtient via le modèle polynomial bidimensionnel prédéterminé, proposé selon la présente invention, une température surfacique de référence lissée entre les différents points de l'ensemble photovoltaïque plan correspondants à des module(s) photovoltaïque(s) sain(s).

Suivant d'autres aspects avantageux de l'invention, le procédé de détermination de perte de puissance d'un ensemble photovoltaïque plan comprend une ou plusieurs des caractéristiques suivantes, prises isolément ou suivant toutes les combinaisons techniquement possibles :

- les coefficients du modèle polynomial bidimensionnel sont obtenus, préalablement à ladite estimation de la température de surface de référence, en utilisant une fonction polyfit de l'outil de calcul numérique MATLAB® ;
- ledit modèle polynomial bidimensionnel prédéterminé est défini par l'équation suivante dans un espace de coordonnées cartésiennes d'axe des abscisses x et d'axe des ordonnées y :

$$\text{Polynominal}_{\{M,N\}}(x,y) = \sum_{l=0}^{M} \sum_{k=0}^{N} P_{(l+1,k+1)} y^{M-l} x^{N-k}$$

avec *N, M* les ordres du modèle polynomial bidimensionnel respectivement selon l'axe des abscisses *x* et l'axe des ordonnées *y*, $P_{(l+1,k+1)}$ les coefficients dudit modèle polynomial obtenus via ladite fonction polyfit, la température $T_G(i,j)$ mesurée de chaque module(s) photovoltaïque(s) sain(s), de coordonnées (i,j) dans l'espace de coordonnées cartésiennes d'axe des abscisses x et d'axe des ordonnées y, dudit premier groupe G étant un point d'accroche dudit modèle polynomial bidimensionnel selon l'équation suivante :

$$T_G(i,j) = \text{Polynominal}_{\{M,N\}}(i,j),$$

la température de surface de référence $T_{Surf}(i,j)$ estimée via ledit modèle polynomial bidimensionnel, étant, pour tout module de coordonnées (i,j) dudit ensemble photovoltaïque telle que :

$$T_{Surf}(i,j) = \text{Polynominal}_{\{M,N\}}(i,j) ;$$

- ledit critère d'erreur quadratique moyenne utilisant la température $T_G(i,j)$ mesurée de chaque module(s) photovoltaïque(s) sain(s) dudit premier groupe G est défini par l'équation suivante :

$$\text{RMSE} = \sqrt{\sum_{i=0}^{I} \sum_{j=0}^{J} \frac{(T_{Surf}(i,j) - T_G(i,j))^2}{Q_G}}$$

avec $Q_G$ le nombre de module(s) photovoltaïque(s) sain(s) dudit premier groupe G, 1 le nombre de module(s) photovoltaïque(s) dudit ensemble photovoltaïque plan selon l'axe des abscisses x et *J* le nombre de module(s) photovoltaïque(s) dudit ensemble photovoltaïque plan selon l'axe des ordonnées y ;
- un modèle Sandia de température est utilisé au cours de l'estimation de l'irradiance $G_{estime}$ et de la température ambiante associée audit module photovoltaïque sain considéré en fonction de données météorologiques et/ou satellites ;
- la température mesurée de chaque module(s) photovoltaïque(s) sain(s) dudit premier groupe ou la température mesurée de chaque module(s) photovoltaïque(s) défectueux dudit deuxième groupe est obtenue par thermographie ;
- la perte de puissance $P_L$ associée à ou auxdits module(s) photovoltaïque(s) défectueux est déterminée selon l'équation suivante, pour tout module *mod* photovoltaïque(s) défectueux dudit deuxième groupe D, et pour tout module *v* sain voisin, dudit module *mod* photovoltaïque défectueux considéré, parmi le nombre prédéterminé $N_{voisin}$ issus de l'étape de recherche :

$$P_L(mod,v) = U_{pv} * A * \frac{T_D(mod) - T_{Surf}(v)}{Pref(v)},$$

avec : $T_D(mod)$ la température mesurée dudit module *mod* photovoltaïque(s) défectueux considéré dudit deuxième groupe D,
$U_{pv}$ un coefficient d'échange thermique prédéterminé desdits modules dudit ensemble photovoltaïque,

*A* la surface utile de chacun desdits modules dudit ensemble photovoltaïque, et

$$Pref(v) = \frac{G_{estime}}{1000} * P_{mppt}(1 + \alpha * (T_{Surf}(v) - 25))$$

où $P_{mppt}$ est une puissance en condition standard prédéterminée par le constructeur de chacun desdits modules dudit ensemble photovoltaïque, et $\alpha$ un facteur de perte de puissance lié à la température ;

- la détermination de la perte de puissance associée à ou auxdits module(s) photovoltaïque(s) défectueux comprend en outre le calcul d'un médian de perte de puissance selon l'équation suivante :

$$P_L(\text{mod}) = \text{median}\big(P_L(\text{mod}, v)\big).$$

L'invention a également pour objet un programme d'ordinateur comportant des instructions logicielles qui, lorsqu'elles sont exécutées par un ordinateur, mettent en oeuvre un procédé de détermination de perte de puissance d'un ensemble photovoltaïque plan tel que défini ci-dessus.

L'invention a aussi pour objet un dispositif électronique de détermination de perte de puissance d'un ensemble photovoltaïque plan, comprenant une ou plusieurs chaînes de modules photovoltaïques, chaque chaîne comprenant au moins un module photovoltaïque, les chaînes étant connectées en série et/ou en parallèle entre une borne positive et une borne négative,

le dispositif électronique de détermination de perte de puissance d'un ensemble photovoltaïque plan comprenant :

- un module de détection configuré pour détecter, pour un état courant dudit ensemble photovoltaïque plan, la présence ou absence de défaut au sein de chaque module photovoltaïque dudit ensemble photovoltaïque ;
- un module de formation configuré pour former, en fonction du résultat de ladite détection, deux groupes de modules photovoltaïques comprenant un premier groupe G de module(s) photovoltaïque(s) sain(s) dépourvu(s) de défaut et un deuxième groupe D de module(s) photovoltaïque(s) défectueux,
- un premier module d'estimation configuré pour estimer, pour chaque module(s) photovoltaïque(s) sain(s) dudit premier groupe, l'irradiance $G_{estime}$ et la température ambiante associée audit module photovoltaïque sain considéré en fonction de données météorologiques et/ou satellites;
- un deuxième module d'estimation configuré pour estimer la température de surface de référence dudit ensemble photovoltaïque via un modèle polynomial bidimensionnel prédéterminé, dont les deux ordres respectivement associés à chaque direction du plan considéré dudit ensemble photovoltaïque plan, minimisent simultanément un critère d'erreur quadratique moyenne utilisant la température mesurée de chaque module(s) photovoltaïque(s) sain(s) dudit premier groupe ;
- un module de recherche configuré pour, pour chaque module(s) photovoltaïque(s) défectueux dudit deuxième groupe, rechercher un nombre prédéterminé $N_{voisin}$ de module(s) photovoltaïque(s) sain(s) voisins les plus proches en distance physique dudit module photovoltaïque défectueux considéré ;
- un module de détermination configuré pour déterminer la perte de puissance associée à ou auxdits module(s) photovoltaïque(s) défectueux en utilisant, pour chaque module(s) photovoltaïque(s) défectueux dudit deuxième groupe D :

  - la température mesurée dudit module photovoltaïque défectueux considéré ;
  - la température de surface de référence estimée via ledit modèle polynomial prédéterminé obtenue en utilisant lesdits module(s) photovoltaïque(s) sain(s) voisins dudit module photovoltaïque défectueux considéré ;

- l'irradiance estimée associée audit module photovoltaïque défectueux en utilisant lesdits module(s) photovoltaïque(s) sain(s) voisins.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

[Fig 1] la figure 1 représente de manière schématique une architecture photovoltaïque classique.
[Fig 2] la figure 2 est une vue schématique d'un dispositif électronique de détermination de perte de puissance d'un ensemble photovoltaïque plan ;
[Fig 3] la figure 3 est un organigramme d'un procédé de détection d'anomalie(s) dans une structure selon la présente invention ;
[Fig 4] la figure 4 illustre schématiquement la perte de puissance détectée via la présente invention.

Par la suite par « état courant » de l'ensemble photovoltaïque plan considéré, on entend l'état de l'ensemble photovoltaïque plan considéré associé à l'instant d'une mesure, notamment une mesure de température de chaque module(s) photovoltaïque(s) dudit ensemble photovoltaïque plan considéré, reçue en entrée dudit procédé selon l'invention.

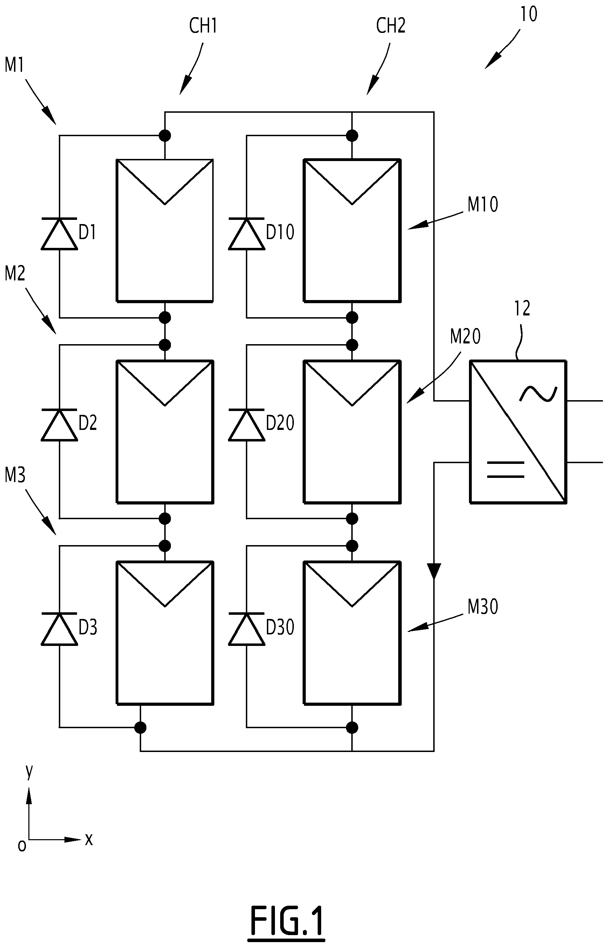

La figure 1 représente de manière schématique une architecture d'un ensemble 10 photovoltaïque classique dont les particularités d'agencement et de fonctionnement sont les suivantes :

Plusieurs chaînes Ch1, Ch2 de modules photovoltaïques, appelés également panneaux photovoltaïques ou panneaux solaires, sont connectées en parallèle, seulement deux chaînes étant représentées sur la figure 1 pour des raisons de simplicité.

Chaque chaîne de modules photovoltaïques comporte plusieurs modules photovoltaïques connectés en série, notamment les modules photovoltaïques M1 à M3 pour la chaine Ch1 et les modules photovoltaïques M10-M30 pour la chaîne Ch2.

Un module photovoltaïque comporte plusieurs cellules photovoltaïques, non représentées, connectées en série. Les cellules photovoltaïques sont réparties en plusieurs rangées. Une rangée peut comporter une ou plusieurs cellules photovoltaïques.

Chaque cellule photovoltaïque est destinée à convertir une énergie solaire en une énergie électrique.

Un convertisseur, par exemple un onduleur 12, comportant plusieurs bras de commutation à base de transistors, est destiné à convertir une tension continue fournie par chaque chaîne de modules en une tension alternative.

Des moyens de commande, intégrés ou non au convertisseur, sont aptes à commander l'onduleur pour effectuer la conversion de tension.

Chaque module comporte avantageusement des diodes anti-retours, non représentées, positionnées de manière adaptée, par exemple en série avec les modules de chaque chaîne.

Chaque module comporte avantageusement des diodes de contournement (dites de "bypass", pour contourner chacune une rangée de cellules distinctes d'un module si une cellule de cette rangée était en défaut. Sur la figure 1, une diode de contournement est représentée par module, les diodes de contournement étant référencées D1, D2, D3, D10, D20, D30.

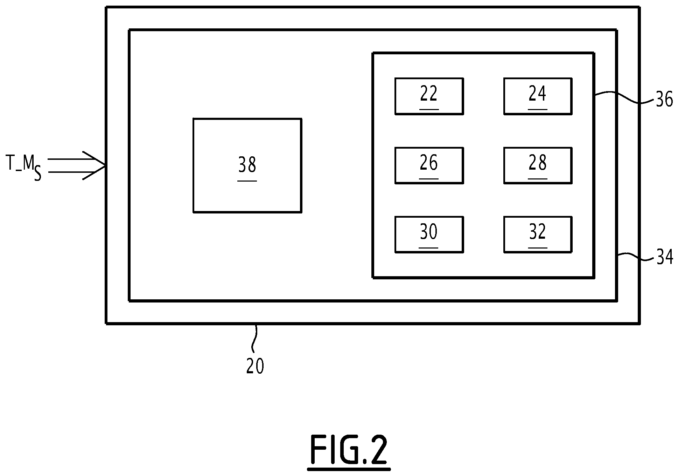

La figure 2 est une vue schématique d'un dispositif électronique 20 de détermination de perte de puissance d'un ensemble photovoltaïque plan.

Il est à noter que le dispositif 20 selon la présente invention est propre à être implémenté sur le site géographique dudit ensemble photovoltaïque plan, ou à distance de ce site géographique (i.e. en une position géographique distincte de celle du site d'implantation dudit ensemble photovoltaïque plan considéré).

Un tel dispositif 20 comprend tout d'abord un module de détection 22 configuré pour détecter, pour un état courant dudit ensemble photovoltaïque plan, la présence ou absence de défaut au sein de chaque module photovoltaïque dudit ensemble photovoltaïque.

Pour ce faire, le module de détection 22 est notamment propre à utiliser la technique décrite dans le brevet EP 3 474 440 B1. En particulier, selon la technique divulguée dans le brevet EP 3 474 440 B1, un tel dispositif électronique 20 de détermination de perte de puissance d'un ensemble photovoltaïque plan selon la présente invention est propre à recevoir en entrée une matrice $T\_M_S$ de température mesurée, notamment par thermographie, des modules photovoltaïques constitutifs dudit ensemble photovoltaïque plan.

De plus, un tel dispositif 20 comprend en outre un module de formation 24 configuré pour former, en fonction du résultat de ladite détection mise en oeuvre par le module de détection 22 précité, deux groupes de modules photovoltaïques comprenant un premier groupe G de module(s) photovoltaïque(s) sain(s) dépourvu(s) de défaut et un deuxième groupe D de module(s) photovoltaïque(s) défectueux, notamment selon la technique divulguée dans le brevet EP 3 474 440 B1.

Plus précisément, la température mesurée de chaque module(s) photovoltaïque(s) sain(s) dudit premier groupe G ou la température mesurée de chaque module(s) photovoltaïque(s) défectueux dudit deuxième groupe D est obtenue par thermographie

En outre, le dispositif 20 selon la présente invention comprend également un premier module d'estimation 26 configuré pour estimer, pour chaque module(s) photovoltaïque(s) sain(s) dudit premier groupe G, l'irradiance $G^{estime}$ et la température ambiante associée audit module photovoltaïque sain considéré en fonction de données météorologiques et/ou satellites.

Par ailleurs, le dispositif 20 selon la présente invention comprend un deuxième module d'estimation 28 configuré pour estimer la température de surface de référence dudit ensemble photovoltaïque via un modèle polynomial bidimensionnel prédéterminé, dont les deux ordres respectivement associés à chaque direction du plan considéré dudit ensemble photovoltaïque plan, minimisent simultanément un critère d'erreur quadratique moyenne utilisant la température mesurée de chaque module(s) photovoltaïque(s) sain(s) dudit premier groupe.

Le dispositif 20 selon la présente invention comprend également un module de recherche 30 configuré pour, pour chaque module(s) photovoltaïque(s) défectueux dudit deuxième groupe, rechercher un nombre prédéterminé $N_{voisin}$ de module(s) photovoltaïque(s) sain(s) voisins les plus proches en distance physique dudit module photovoltaïque défectueux considéré.

Enfin, le dispositif 20 selon la présente invention un module de détermination 32 configuré pour déterminer la perte de puissance associée à ou auxdits module(s) photovoltaïque(s) défectueux en utilisant, pour chaque module(s) photovoltaïque(s) défectueux dudit deuxième groupe D :

- la température mesurée dudit module photovoltaïque défectueux considéré ;
- la température de surface de référence estimée via ledit modèle polynomial prédéterminé obtenue en utilisant, comme décrit par la suite, lesdits module(s) photovoltaïque(s) sain(s) voisins dudit module photovoltaïque défectueux considéré ;
- l'irradiance estimée associée audit module photovoltaïque défectueux en utilisant les module(s) photovoltaïque(s) sain(s) voisins, comme décrit par la suite.

Dans l'exemple de la figure 2, le dispositif électronique 20 de détermination de perte de puissance d'un ensemble photovoltaïque plan comprend une unité de traitement d'informations 34 formée par exemple d'une mémoire 36 et d'un processeur 38 associé à la mémoire 36.

Dans l'exemple de la figure 2, le module de détection 22, le module de formation 24, le premier module d'estimation 26, le deuxième module d'estimation 28, le module de recherche 30 et le module de détermination 32 sont réalisés chacun sous forme d'un logiciel, ou d'une brique logicielle, exécutable par le processeur 38. La mémoire 36 du dispositif électronique 20 de détermination de perte de puissance d'un ensemble photovoltaïque plan est alors apte à stocker un logiciel de détection, et un logiciel de formation, un premier logiciel d'estimation, un deuxième logiciel d'estimation, un logiciel de recherche, et un logiciel de détermination. Le processeur 38 est alors apte à exécuter chacun des logiciels parmi le logiciel de détection, le logiciel de formation, le premier logiciel d'estimation, le deuxième logiciel d'estimation, le logiciel de recherche, et le logiciel de détermination.

En variante non représentée, le module de détection 22, le module de formation 24, le premier module d'estimation 26, le deuxième module d'estimation 28, le module de recherche 30 et le module de détermination 32 sont réalisés chacun sous forme d'un composant logique programmable, tel qu'un FPGA (de l'anglais *Field Programmable Gate Array),* ou sous forme d'un circuit intégré, tel qu'un ASIC (de l'anglais *Application Spécific Integrated Circuit).*

Lorsque le dispositif électronique 20 de détermination de perte de puissance d'un ensemble photovoltaïque plan est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comprenant des instructions logicielles.

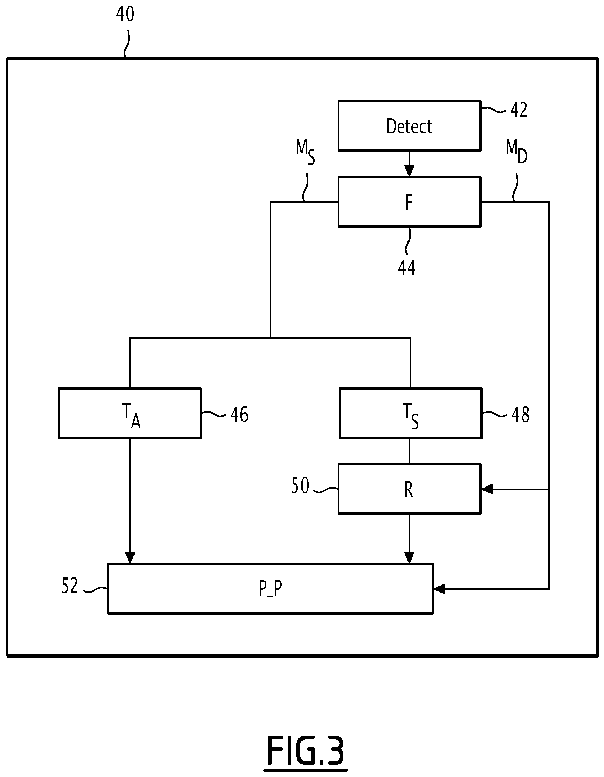

Le fonctionnement du dispositif électronique 20 de détermination de perte de puissance d'un ensemble photovoltaïque plan va maintenant être décrit en référence à la figure 3 qui illustre schématiquement un exemple de mise en oeuvre, selon la présente invention, d'un procédé 40 de détermination de perte de puissance d'un ensemble photovoltaïque plan.

Le procédé 40 selon la présente invention comprend tout d'abord, pour un état courant dudit ensemble photovoltaïque plan, une étape 42 selon laquelle le dispositif 20, via son module électronique 22 de détection, détecte la présence ou l'absence de défaut au sein de chaque module photovoltaïque dudit ensemble photovoltaïque.

Comme indiqué précédemment une telle détection est notamment mise en oeuvre en appliquant la technique décrite dans le brevet EP 3 474 440 B1.

Le procédé 40 selon la présente invention comprend ensuite une étape 44, au cours de laquelle, en fonction du résultat de ladite détection, le dispositif 20, via son module électronique 24 de formation, forme deux groupes de modules photovoltaïques comprenant un premier groupe G de module(s) photovoltaïque(s) sain(s) $M_S$ dépourvu(s) de défaut et un deuxième groupe D de module(s) photovoltaïque(s) défectueux $M_D$.

Plus précisément, chaque module(s) photovoltaïque(s) sain(s) $M_S$ de coordonnées $(i,j)$ dans l'espace, tel qu'illustré sur la figure 1, de coordonnées cartésiennes d'axe des abscisses $x$ et d'axe des ordonnées $y$ présente une température $T_G(i,j)$ mesurée, notamment par thermographie, tandis que chaque module(s) photovoltaïque(s) défectueux $M_D$ de coordonnées $(i,j)$ présente une température $T_D(i,j)$ mesurée, notamment également par thermographie.

Puis, tel qu'illustré sur le mode de réalisation de la figure 3, le procédé 40 selon la présente invention comprend ensuite une étape 46, mise en oeuvre par ledit dispositif 20, via son premier module électronique 26 d'estimation, et pour, seulement, chaque module(s) photovoltaïque(s) sain(s) $M_S$ dudit premier groupe G, d'estimation de l'irradiance $G^{estime}$ et de la température ambiante associée audit module photovoltaïque sain considéré en fonction de données météorologiques et/ou satellites.

Selon une variante optionnelle, ladite étape 46 d'estimation de l'irradiance $G^{estime}$ et de la température ambiante associée audit module photovoltaïque sain considéré est mise en oeuvre en utilisant un modèle Sandia de température.

Plus précisément, comme indiqué précédemment en mesurant, notamment par thermographie, la température $T_G(i,j)$ mesurée de chaque module(s) photovoltaïque(s) sain(s) dudit premier groupe G est obtenue. De plus, selon cette étape 46, en utilisant un modèle Sandia de température, des données météorologiques et/ou satellites, fournies notamment par une centrale météo, sont utilisées pour obtenir :

- une température ambiante $T^{meteo}_{amb}$ ,
- une mesure de vitesse du vent $WS^{meteo}$, et enfin
- l'irradiance solaire $G^{meteo}$ venant de la centrale météo.

Selon le modèle Sandia, l'équation suivante permet de déterminer la température en degré Celsius $T^{Sandia}$ d'un module photovoltaïque considéré :

$$T^{Sandia} = G^{meteo} * e^{a+b*WS^{meteo}} + T^{meteo}_{amb},$$

avec a, b des coefficients expérimentaux prédéterminés, par exemple :
a = -3.47, et b= -0.0594.

Selon cette étape 46, l'irradiance ambiante $G^{estime}$ est tout d'abord obtenue selon l'équation suivante :

$$G^{estime} = \frac{moyenne\ (T_G(i,j)) - T^{Sandia}}{e^{a+b*WS^{meteo}}} + G^{meteo},$$

et la température ambiante $T^{estime}_{amb}(i,j)$ associée est estimée pour chaque module photovoltaïque de coordonnées (i, j) au sein du plan de toiture de l'ensemble photovoltaïque pour approcher la gradient thermique et selon l'équation suivante :

$$T^{estime}_{amb}(i,j) = \left(T_G(i,j)\right) - G^{estime} * e^{a+b*WS^{meteo}}.$$

Puis, tel qu'illustré par la figure 3, le procédé 40 selon la présente invention comprend une étape 48, mise en oeuvre par ledit dispositif 20, via son deuxième module électronique 28 d'estimation, pour estimer la température de surface de référence dudit ensemble photovoltaïque via un modèle polynomial bidimensionnel prédéterminé, dont les deux ordres respectivement associés à chaque direction du plan considéré dudit ensemble photovoltaïque plan, minimisent simultanément un critère d'erreur quadratique moyenne utilisant la température mesurée de chaque module(s) photovoltaïque(s) sain(s) dudit premier groupe.

En complément optionnel, les coefficients du modèle polynomial bidimensionnel sont obtenus, préalablement à ladite estimation 48 de la température de surface de référence, en utilisant une fonction polyfit de l'outil de calcul numérique MATLAB®.

Selon une variante particulière de ce complément optionnel, ledit modèle polynomial bidimensionnel prédéterminé est défini par l'équation suivante dans un espace de coordonnées cartésiennes d'axe des abscisses x et d'axe des ordonnées y.

$$\text{Polynominal}_{\{M,N\}}(x,y) = \sum_{l=0}^{M} \sum_{k=0}^{N} P_{(l+1,k+1)} y^{M-l} x^{N-k}$$

avec $N, M$ les ordres du modèle polynomial bidimensionnel respectivement selon l'axe des abscisses $x$ et l'axe des ordonnées $y$, $P_{(l+1,k+1)}$ les coefficients dudit modèle polynomial obtenus via ladite fonction polyfit, la température $T_G(i,j)$ mesurée de chaque module(s) photovoltaïque(s) sain(s), de coordonnées (i,j) dans l'espace de coordonnées cartésiennes d'axe des abscisses x et d'axe des ordonnées y, dudit premier groupe G étant un point d'accroche dudit modèle polynomial bidimensionnel selon l'équation suivante :

$$T_G(i,j) = \text{Polynominal}_{\{M,N\}}(i,j),$$

la température de surface de référence $T_{Surf}(i,j)$ estimée via ledit modèle polynomial bidimensionnel, étant, pour tout module de coordonnées (i,j) dudit ensemble photovoltaïque telle que :

$$T_{\text{Surf}}(i,j) = \text{Polynominal}_{\{M,N\}}(i,j).$$

Autrement dit, en se basant notamment sur la matrice *moyenne* ($T_G(i,j)$) de température moyenne mesurée des modules sains, on va estimer à l'aide d'un modèle polynomial de la température de surface de l'ensemble photovoltaïque plan. Un tel modèle polynomial permet avantageusement de reproduire la température de surface de l'ensemble photovoltaïque considéré, en utilisant la température des modules sains dispersés au sein dudit ensemble photovoltaïque comme des points d'accroches. Un tel modèle polynomial de la température de surface permet en outre avantageusement d'interpoler d'une part la température des modules défectueux manquants et d'autre part, d'évaluer les gradients thermiques et les phénomènes de refroidissement naturelles.

Selon une variante additionnelle de ce complément optionnel, ledit critère d'erreur quadratique moyenne utilisant la température $T_G(i,j)$ mesurée de chaque module(s) photovoltaïque(s) sain(s) dudit premier groupe G est défini par l'équation suivante :

$$\text{RMSE} = \sqrt{\sum_{i=0}^{I} \sum_{j=0}^{J} \frac{(T_{\text{Surf}}(i,j) - T_G(i,j))^2}{Q_G}}$$

avec, comme indiqué précédemment $T_{\text{Surf}}(i,j) = \text{Polynominal}_{\{M,N\}}(i,j)$, $Q_G$ le nombre de module(s) photovoltaïque(s) sain(s) dudit premier groupe G, 1 le nombre de module(s) photovoltaïque(s) dudit ensemble photovoltaïque plan selon l'axe des abscisses x et $J$ le nombre de module(s) photovoltaïque(s) dudit ensemble photovoltaïque plan selon l'axe des ordonnées y.

Selon la présente invention, les deux ordres N et M optimaux sont ainsi les ordres qui minimisent le RMSE entre la température observée (i.e. mesurée $T_G(i,j)$) et la température de surface interpolée $T_{\text{Surf}}(i,j)$. Autrement dit, les deux ordres N et M associés au RMSE le plus faible (i.e. minimal) sont sélectionnés, et la matrice de température de surface interpolée $T_{\text{Surf}}(i,j)$ obtenue pour tout couple de coordonnées (i,j) est utilisée comme décrit par la suite pour déterminer la perte de puissance de l'ensemble photovoltaïque considéré due à la chute de production des modules photovoltaïques défectueux.

Il est à noter, qu'une telle étape 48 est mise en oeuvre parallèlement, préalablement ou encore successivement à l'étape 46 précédemment décrite.

Le procédé 40 selon la présente invention comprend ensuite une étape 50 mise en oeuvre par le dispositif 20, via son module de recherche 30, de recherche d'un nombre prédéterminé $N_{\text{voisin}}$ de module(s) photovoltaïque(s) sain(s) voisins les plus proches en distance physique dudit module photovoltaïque défectueux considéré.

Par exemple, pour chaque module photovoltaïque défectueux dudit deuxième groupe D, $N_{\text{voisin}}$ = 10 module(s) photovoltaïque(s) sain(s) voisins sont recherchés au plus proche en terme de distance physique du module photovoltaïque défectueux considéré.

Le procédé 40 selon la présente invention comprend ensuite une étape 52 mise en oeuvre par le dispositif 20, via son module de détermination 32, de détermination de la perte de puissance associée à ou auxdits module(s) photovoltaïque(s) défectueux en utilisant, pour chaque module(s) photovoltaïque(s) défectueux dudit deuxième groupe D :

- la température mesurée dudit module photovoltaïque défectueux considéré ;
- la température de surface de référence estimée via ledit modèle polynomial prédéterminé obtenue en utilisant lesdits module(s) photovoltaïque(s) sain(s) voisins dudit module photovoltaïque défectueux considéré ;
- l'irradiance estimée associée audit module photovoltaïque défectueux considéré en utilisant les module(s) photovoltaïque(s) sain(s) voisins.

En particulier, en complément optionnel relatif à cette étape 52, la perte de puissance $P_L$ associée à ou auxdits module(s) photovoltaïque(s) défectueux est déterminée selon l'équation suivante, pour tout module *mod* photovoltaïque(s) défectueux dudit deuxième groupe D, et pour tout module *v* sain voisin, dudit module *mod* photovoltaïque défectueux considéré, parmi le nombre prédéterminé $N_{\text{voisin}}$ issus de l'étape de recherche précédente 50 :

$$P_L(mod, v) = U_{pv} * A * \frac{T_D(mod) - T_{\text{Surf}}(v)}{Pref(v)},$$

avec : $T_D(mod)$ la température mesurée dudit module *mod* photovoltaïque(s) défectueux considéré dudit deuxième

groupe D,

$U_{pv}$ un coefficient d'échange thermique prédéterminé desdits modules dudit ensemble photovoltaïque, par exemple tel que $U_{pv}$ = 28,07W $C°/m^2$ ,

*A* la surface utile en $m^2$ de chacun desdits modules dudit ensemble photovoltaïque, et

$$Pref(v) = \frac{G_{estime}}{1000} * P_{mppt}(1 + \alpha * (\text{T}_{\text{Surf}}(v) - 25))$$

où $P_{mppt}$ est une puissance en condition standard prédéterminée par le constructeur de chacun desdits modules dudit ensemble photovoltaïque, par exemple de $1000W/m^2$, et $\alpha$ un facteur de perte de puissance lié à la température tel que :

$$\alpha = -0,0039/C°.$$

En complément optionnel relatif à cette étape 52, la détermination de la perte de puissance associée à ou auxdits module(s) photovoltaïque(s) défectueux comprend en outre le calcul d'un médian de perte de puissance selon l'équation suivante :

$$\text{P}_{\text{L}}(\text{mod}) = \text{median}\big(\text{P}_{\text{L}}(\text{mod}, \text{v})\big),$$

cette perte de puissance médiane étant la plus représentative de la chute de production associée.

Selon un mode de réalisation préférentiel l'ensemble des étapes du procédé 40 précitées sont mise en oeuvre automatiquement sans intervention humaine.

Selon un aspect optionnel complémentaire non représenté sur la figure 3, le procédé 40 selon la présente invention comprend en outre une étape de restitution de la perte de puissance déterminée à l'étape 52 notamment par transmission de cette perte de puissance à un utilisateur et/ou par affichage de ladite perte de puissance sur une interface homme-machine.

Autrement dit, la présente invention est propre à transformer une matrice de température mesurées par thermographie en une perte de puissance transmise et ou affichée.

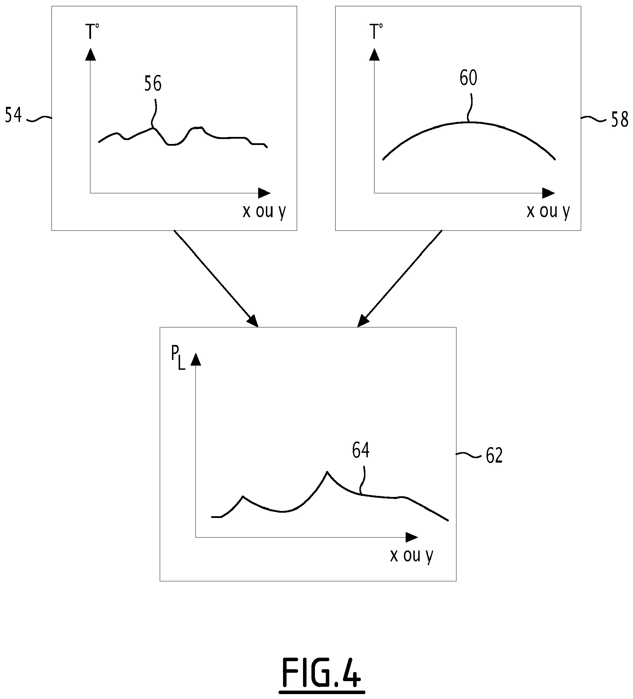

La figure 4 illustre schématiquement la perte de puissance détectée via la présente invention.

En particulier, la vue 54 représente le profil 56 de température moyenne mesurée, selon l'axe des x ou des y, des seuls modules sains de l'ensemble photovoltaïque considéré, les modules photovoltaïques défectueux n'étant pas pris en compte.

La vue 58 de la figure 4 illustre l'application du modèle polynomial bidimensionnel en utilisant la température des modules sains comme points d'accroches, ce qui se traduit par un profil 60, selon l'axe des x ou des y, de la température surfacique. Le résultat optimal 60 est notamment obtenu avec un ordre (M=4, N=6), pour M et N variant respectivement de 1 à 10, respectivement en x et en y, et une erreur associée :

$$\min_{RMSE} = \min\left(\sqrt{\sum_{i=0}^{I} \sum_{j=0}^{J} \frac{(\text{T}_{\text{Surf}}(i,j) - \text{T}_{\text{G}}(i,j))^2}{Q_G}}\right) = 1,3819°C$$

par rapport à la mesure, pour une centrale photovoltaïque prédéterminée, ladite centrale photovoltaïque correspondant à un ensemble photovoltaïque PV plan (ce résultat étant propre à changer selon la centrale photovoltaïque prédéterminée), ce qui est performant en termes de précision.

La vue 62 illustre le profil 64 d'estimation de la perte de puissance associée, selon l'axe des x ou des y, les pics de ce profil 64 étant associés à la présence des modules les plus défectueux présentant la perte de puissance la plus élevée parmi l'ensemble des modules photovoltaïques considéré.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

Ainsi, la présente invention propose un procédé et un dispositif de détermination de perte de puissance d'un ensemble photovoltaïque plan propres à quantifier les chutes de production en se basant seulement sur la donnée de la température du module et propose, pour ce faire, la construction d'un modèle de température de surface de référence adapté et validé sous réserve de la présence de modules photovoltaïques sains jouant le rôle de point d'accroche dudit modèle afin de tenir compte des phénomènes de gradients et ponts thermiques.

L'application d'un tel modèle de température de surface est un maillon primordial et distinctif du procédé plus global proposé selon la présente invention, ledit procédé ayant en outre comme objectif la détection de défauts thermiques sur un ensemble photovoltaïque plan et l'extraction des modules sains afin d'estimer la chute de production associée aux modules défectueux.

## Revendications

1. Procédé de détermination de perte de puissance d'un ensemble photovoltaïque plan comprenant une ou plusieurs chaînes de modules photovoltaïques, chaque chaîne comprenant au moins un module photovoltaïque, les chaînes étant connectées en série et/ou en parallèle entre une borne positive et une borne négative,

   le procédé étant mis en oeuvre par un dispositif électronique de détermination de perte de puissance d'un ensemble photovoltaïque plan, et comprenant les étapes suivantes, pour un état courant dudit ensemble photovoltaïque plan :

   - détection (42) de la présence ou absence de défaut au sein de chaque module photovoltaïque dudit ensemble photovoltaïque ;
   - en fonction du résultat de ladite détection, formation (44) de deux groupes de modules photovoltaïques comprenant un premier groupe G de module(s) photovoltaïque(s) sain(s) dépourvu(s) de défaut et un deuxième groupe D de module(s) photovoltaïque(s) défectueux,
   - pour chaque module(s) photovoltaïque(s) sain(s) dudit premier groupe G, estimation (46) de l'irradiance $G_{estime}$ et de la température ambiante associée audit module photovoltaïque sain considéré en fonction de données météorologiques et/ou satellites;
   - estimation (48) de la température de surface de référence dudit ensemble photovoltaïque via un modèle polynomial bidimensionnel prédéterminé, dont les deux ordres respectivement associés à chaque direction du plan considéré dudit ensemble photovoltaïque plan, minimisent simultanément un critère d'erreur quadratique moyenne utilisant la température mesurée de chaque module(s) photovoltaïque(s) sain(s) dudit premier groupe ;
   - pour chaque module(s) photovoltaïque(s) défectueux dudit deuxième groupe, recherche (50) d'un nombre prédéterminé $N_{voisin}$ de module(s) photovoltaïque(s) sain(s) voisins les plus proches en distance physique dudit module photovoltaïque défectueux considéré ;
   - détermination (52) de la perte de puissance associée à ou auxdits module(s) photovoltaïque(s) défectueux en utilisant, pour chaque module(s) photovoltaïque(s) défectueux dudit deuxième groupe D :

     - la température mesurée dudit module photovoltaïque défectueux considéré ;
     - la température de surface de référence estimée via ledit modèle polynomial prédéterminé obtenue en utilisant lesdits module(s) photovoltaïque(s) sain(s) voisins dudit module photovoltaïque défectueux considéré ;
     - l'irradiance estimée associée audit module photovoltaïque défectueux en utilisant les module(s) photovoltaïque(s) sain(s) voisins.

2. Procédé selon la revendication 1, dans lequel les coefficients du modèle polynomial bidimensionnel sont obtenus, préalablement à ladite estimation (48) de la température de surface de référence, en utilisant une fonction polyfit de l'outil de calcul numérique MATLAB®.

3. Procédé selon la revendication 2, dans lequel ledit modèle polynomial bidimensionnel prédéterminé est défini par l'équation suivante dans un espace de coordonnées cartésiennes d'axe des abscisses x et d'axe des ordonnées y :

$$\text{Polynominal}_{\{M,N\}}(x,y) = \sum_{l=0}^{M} \sum_{k=0}^{N} P_{(l+1,k+1)} y^{M-l} x^{N-k}$$

avec *N, M* les ordres du modèle polynomial bidimensionnel respectivement selon l'axe des abscisses *x* et l'axe des ordonnées *y*, $P_{(l+1,k+1)}$ les coefficients dudit modèle polynomial obtenus via ladite fonction polyfit, la température $T_G(i,j)$ mesurée de chaque module(s) photovoltaïque(s) sain(s), de coordonnées (i,j) dans l'espace de coordonnées cartésiennes d'axe des abscisses x et d'axe des ordonnées y, dudit premier groupe G étant un point d'accroche dudit modèle polynomial bidimensionnel selon l'équation suivante :

$$T_G(i,j) = \text{Polynominal}_{\{M,N\}}(i,j),$$

la température de surface de référence $T_{Surf}(i,j)$ estimée via ledit modèle polynomial bidimensionnel, étant, pour tout module de coordonnées (i,j) dudit ensemble photovoltaïque telle que :

$$T_{Surf}(i,j) = \text{Polynominal}_{\{M,N\}}(i,j).$$

4. Procédé selon la revendication 3, dans lequel ledit critère d'erreur quadratique moyenne utilisant la température $T_G(i,j)$ mesurée de chaque module(s) photovoltaïque(s) sain(s) dudit premier groupe G est défini par l'équation suivante :

$$\text{RMSE} = \sqrt{\sum_{i=0}^{I} \sum_{j=0}^{J} \frac{(T_{Surf}(i,j) - T_G(i,j))^2}{Q_G}}$$

avec $Q_G$ le nombre de module(s) photovoltaïque(s) sain(s) dudit premier groupe G, 1 le nombre de module(s) photovoltaïque(s) dudit ensemble photovoltaïque plan selon l'axe des abscisses x et *J* le nombre de module(s) photovoltaïque(s) dudit ensemble photovoltaïque plan selon l'axe des ordonnées y.

5. Procédé selon l'une quelconque des revendications précédentes, dans lequel un modèle Sandia de température est utilisé au cours de l'estimation de l'irradiance $G_{estime}$ et de la température ambiante associée audit module photovoltaïque sain considéré en fonction de données météorologiques et/ou satellites.

6. Procédé selon l'une quelconque des revendications précédentes, dans lequel la température mesurée de chaque module(s) photovoltaïque(s) sain(s) dudit premier groupe ou la température mesurée de chaque module(s) photovoltaïque(s) défectueux dudit deuxième groupe est obtenue par thermographie.

7. Procédé selon l'une quelconque des revendications précédentes, dans lequel la perte de puissance $P_L$ associée à ou auxdits module(s) photovoltaïque(s) défectueux est déterminée selon l'équation suivante, pour tout module *mod* photovoltaïque(s) défectueux dudit deuxième groupe D, et pour tout module *v* sain voisin, dudit module *mod* photovoltaïque défectueux considéré, parmi le nombre prédéterminé $N_{voisin}$ issus de l'étape de recherche (50) :

$$P_L(mod,v) = U_{pv} * A * \frac{T_D(mod) - T_{Surf}(v)}{Pref(v)},$$

avec : $T_D(mod)$ la température mesurée dudit module *mod* photovoltaïque(s) défectueux considéré dudit deuxième groupe D,
$U_{pv}$ un coefficient d'échange thermique prédéterminé desdits modules dudit ensemble photovoltaïque,
*A* la surface utile de chacun desdits modules dudit ensemble photovoltaïque, et

$$Pref(v) = \frac{G_{estime}}{1000} * P_{mppt}(1 + \alpha * (T_{Surf}(v) - 25))$$

où $P_{mppt}$ est une puissance en condition standard prédéterminée par le constructeur de chacun desdits modules dudit ensemble photovoltaïque, et $\alpha$ un facteur de perte de puissance lié à la température.

8. Procédé selon la revendication 7, dans lequel la détermination (52) de la perte de puissance associée à ou auxdits module(s) photovoltaïque(s) défectueux comprend en outre le calcul d'un médian de perte de puissance selon l'équation suivante :

$$P_L(\text{mod}) = \text{median}\big(P_L(\text{mod}, v)\big).$$

9. Programme d'ordinateur comportant des instructions comportant des instructions logicielles qui, lorsqu'elles sont exécutées par un ordinateur, mettent en oeuvre un procédé de détermination de perte de puissance d'un ensemble photovoltaïque plan conforme aux revendications 1 à 8.

10. Dispositif électronique de détermination de perte de puissance d'un ensemble photovoltaïque plan comprenant une ou plusieurs chaînes de modules photovoltaïques, chaque chaîne comprenant au moins un module photovoltaïque, les chaînes étant connectées en série et/ou en parallèle entre une borne positive et une borne négative,

le dispositif électronique de détermination de perte de puissance d'un ensemble photovoltaïque plan comprend:

- un module de détection (22) configuré pour détecter, pour un état courant dudit ensemble photovoltaïque plan, la présence ou absence de défaut au sein de chaque module photovoltaïque dudit ensemble photovoltaïque ;
- un module de formation (24) configuré pour former, en fonction du résultat de ladite détection, deux groupes de modules photovoltaïques comprenant un premier groupe G de module(s) photovoltaïque(s) sain(s) dépourvu(s) de défaut et un deuxième groupe D de module(s) photovoltaïque(s) défectueux,

ledit dispositif étant **caractérisé par** :

- un premier module d'estimation (26) configuré pour estimer, pour chaque module(s) photovoltaïque(s) sain(s) dudit premier groupe, l'irradiance $G_{estime}$ et la température ambiante associée audit module photovoltaïque sain considéré en fonction de données météorologiques et/ou satellites;
- un deuxième module d'estimation (28) configuré pour estimer la température de surface de référence dudit ensemble photovoltaïque via un modèle polynomial bidimensionnel prédéterminé, dont les deux ordres respectivement associés à chaque direction du plan considéré dudit ensemble photovoltaïque plan, minimisent simultanément un critère d'erreur quadratique moyenne utilisant la température mesurée de chaque module(s) photovoltaïque(s) sain(s) dudit premier groupe ;
- un module de recherche (30) configuré pour, pour chaque module(s) photovoltaïque(s) défectueux dudit deuxième groupe, rechercher un nombre prédéterminé $N_{voisin}$ de module(s) photovoltaïque(s) sain(s) voisins les plus proches en distance physique dudit module photovoltaïque défectueux considéré ;
- un module de détermination (32) configuré pour déterminer la perte de puissance associée à ou auxdits module(s) photovoltaïque(s) défectueux en utilisant, pour chaque module(s) photovoltaïque(s) défectueux dudit deuxième groupe D :

- la température mesurée dudit module photovoltaïque défectueux considéré ;

- la température de surface de référence estimée via ledit modèle polynomial prédéterminé obtenue en utilisant lesdits module(s) photovoltaïque(s) sain(s) voisins dudit module photovoltaïque défectueux considéré ;
- l'irradiance estimée associée audit module photovoltaïque défectueux en utilisant les module(s) photovoltaïque(s) sain(s) voisins.

## Patentansprüche

1. Verfahren zum Bestimmen des Leistungsverlusts einer planaren Photovoltaikanordnung, umfassend einen oder mehrere Stränge von Solarmodulen, jeder Strang umfassend mindestens ein Solarmodul, wobei die Stränge zwischen einem positiven und einem negativen Anschluss in Reihe und/oder parallel geschaltet sind, wobei das Verfahren von einer elektronischen Vorrichtung zum Bestimmen des Leistungsverlusts einer planaren Photovoltaikanordnung durchgeführt wird und die folgenden Schritte für einen aktuellen Zustand der planaren Photovoltaikanordnung Folgendes umfasst:

- Erfassen (42) des Vorhandenseins oder Nichtvorhandenseins eines Fehlers innerhalb jedes Solarmoduls der Photovoltaikanordnung;
- abhängig von dem Resultat der Erfassung, Bilden (44) von zwei Gruppen von Solarmodulen, umfassend eine erste Gruppe G von gesunden Solarmodulen ohne Fehler und eine zweite Gruppe D von defekten Solarmodulen,
- für jedes oder alle gesunde Solarmodule der ersten Gruppe G, Schätzen (46) der Einstrahlung $G_{geschätzt}$ und der Umgebungstemperatur, die mit dem betrachteten gesunden Solarmodul assoziiert sind, abhängig von Wetter- und/oder Satellitendaten;
- Schätzen (48) der Referenzoberflächentemperatur der Photovoltaikanordnung über ein vorbestimmtes zweidimensionales Polynommodell, dessen zwei Ordnungen, die jeweils mit jeder Richtung der betrachteten Ebene der ebenen Photovoltaikanordnung assoziiert sind, gleichzeitig ein Kriterium für den mittleren quadratischen Fehler minimieren, wobei die gemessene Temperatur von jedem oder allen gesunden Solarmodulen der ersten Gruppe verwendet wird;
- für jedes oder alle defekte Solarmodule der zweiten Gruppe, Suchen (50) nach einer vorbestimmten Anzahl $N_{benachbart}$ von benachbarten gesunden Solarmodulen, die dem betrachteten defekten Solarmodul in der physischen Entfernung am nächsten sind;
- Bestimmen (52) des Leistungsverlusts, der mit dem oder den fehlerhaften Solarmodulen assoziiert ist, indem für jedes oder alle fehlerhafte Solarmodule der zweiten Gruppe D Folgendes verwendet wird:

- die gemessene Temperatur des betrachteten fehlerhaften Solarmoduls;
- die Referenzoberflächentemperatur, die über das vorbestimmte Polynommodell geschätzt wird, das unter Verwendung der gesunden Solarmodule in der Nähe des betrachteten fehlerhaften Solarmoduls erlangt wird;
- die geschätzte Einstrahlung, die mit dem fehlerhaften Solarmodul assoziiert ist, unter Verwendung des/der benachbarten gesunden Solarmodule.

2. Verfahren nach Anspruch 1, wobei die Koeffizienten des zweidimensionalen Polynommodells vor der Schätzung (48) der Referenzoberflächentemperatur unter Verwendung einer Polyfit-Funktion des numerischen Berechnungstools MATLAB® erlangt werden.

3. Verfahren nach Anspruch 2, wobei das vorbestimmte zweidimensionale Polynommodell in einem kartesischen Koordinatenraum mit der x-Achse und der y-Achse durch die folgende Gleichung definiert ist:

$$\text{Polynominal}_{\{M,N\}}(x,y) = \sum_{l=0}^{M} \sum_{k=0}^{N} P_{(l+1,k+1)} y^{M-l} x^{N-k}$$

wobei N, M die Ordnungen des zweidimensionalen Polynommodells jeweils entlang der x-Achse und der y-Achse sind, $P_{(l+1,k+1)}$ die Koeffizienten des genannten Polynommodells sind, die über die genannte Polyfit-Funktion erlangt werden, die gemessene Temperatur $T_G(i,j)$ von jedem oder allen gesunden Solarmodulen mit den Koordinaten (i,j) in dem kartesischen Koordinatenraum mit der x-Achse und der y-Achse der ersten Gruppe G ein Aufhängungspunkt des zweidimensionalen Polynommodells gemäß der folgenden Gleichung ist:

$$T_G(i,j) = \text{Polynominal}_{\{M_N\}}(i,j),$$

die Referenzoberflächentemperatur $T_{Surf}(i,j)$, die über das zweidimensionale Polynommodell geschätzt wird, für jedes Koordinatenmodul (i,j) der Photovoltaikanordnung ist, sodass:

$$T_{Surf}(i,j) = \text{Polynominal}_{\{M\,N\}}(i,j).$$

4. Verfahren nach Anspruch 3, wobei das Kriterium für den mittleren quadratischen Fehler unter Verwendung der gemessenen Temperatur $T_G(i,j)$ von jedem oder allen gesunden Solarmodulen der ersten Gruppe G durch die folgende Gleichung definiert ist:

$$\text{RMSE} = \sqrt{\sum_{i=0}^{I} \sum_{j=0}^{J} \frac{(T_{Surf}(i,j) - T_G(i,j))^2}{Q_G}}$$

wobei $Q_G$ die Anzahl des/der gesunden Solarmodule der ersten Gruppe G ist, I die Anzahl des/der Solarmodule der planaren Photovoltaikanordnung entlang der x-Achse ist und $J$ die Anzahl des/der Solarmodu(e) der planaren Photovoltaikanordnung entlang der y-Achse ist.

5. Verfahren nach einem der vorherigen Ansprüche, wobei bei der Schätzung der Einstrahlung $G_{geschätzt}$ ein Sandia-Temperaturmodell und die Umgebungstemperatur, die mit dem betrachteten gesunden Solarmodul assoziiert ist, basierend auf Wetter- und/oder Satellitendaten verwendet wird.

6. Verfahren nach einem der vorherigen Ansprüche, wobei die gemessene Temperatur von jedem oder allen gesunden Solarmodulen der ersten Gruppe oder die gemessene Temperatur von jedem oder allen defekten Solarmodulen der zweiten Gruppe durch Thermografie erlangt wird.

7. Verfahren nach einem der vorherigen Ansprüche, wobei der Leistungsverlust $P_L$, der mit dem/den fehlerhaften PV-Modulen assoziiert ist, gemäß der folgenden Gleichung für jedes oder alle fehlerhaften Solarmodule *mod* der zweiten Gruppe D und für jedes benachbarte gesunde Modul v des betrachteten fehlerhaften Solarmoduls *mod* der vorbestimmten Anzahl $N_{benachbart}$ aus dem Suchschritt (50) bestimmt wird:

$$P_L(mod, v) = U_{pv} * A * \frac{\mathrm{T_D}(mod) - \mathrm{T_{Surf}}(v)}{Pref(v)},$$

wobei: $\mathrm{T_D}$ (*mod*) die gemessene Temperatur des/der betrachteten fehlerhaften Solarmodule *mod* der zweiten Gruppe D ist,
$U_{pv}$ ein vorbestimmter Wärmeaustauschkoeffizient der Module der Photovoltaikanordnung ist,
$A$ die Nutzfläche von jedem der Module der Photovoltaikanordnung ist, und

$$Pref(v) = \frac{G_{estime}}{1000} * P_{mppt}(1 + \alpha * (\mathrm{T_{Surf}}(v) - 25))$$

wobei $P_{mppt}$ eine von dem Hersteller vorbestimmte Leistung unter Standardbedingungen von jedem der Module der Photovoltaikanordnung ist und $\alpha$ ein temperaturabhängiger Leistungsverlustfaktor ist.

8. Verfahren nach Anspruch 7, wobei die Bestimmung (52) des Leistungsverlusts, der mit dem/den fehlerhaften Solarmodulen assoziiert ist, ferner die Berechnung eines medianen Leistungsverlusts gemäß der folgenden Gleichung umfasst:

$$\mathrm{PL}(mod) = \mathrm{median}(\mathrm{PL}(mod, v)).$$

9. Computerprogramm, umfassend Softwareanweisungen, die, wenn sie von einem Computer ausgeführt werden, ein Leistungsverlust-Bestimmungsverfahren einer Photovoltaikanordnung gemäß den Ansprüchen 1 bis 8 implementieren.

10. Elektronische Vorrichtung zum Bestimmen des Leistungsverlusts einer planaren Photovoltaikanordnung, umfassend einen oder mehrere Stränge von Solarmodulen, jeder Strang umfassend mindestens ein Solarmodul, wobei die Stränge zwischen einem positiven und einem negativen Anschluss in Reihe und/oder parallel verbunden sind, wobei die elektronische Vorrichtung zum Bestimmen des Leistungsverlusts einer planaren Photovoltaikanordnung Folgendes umfasst:

- ein Erfassungsmodul (22), das konfiguriert ist, um für einen aktuellen Zustand der planaren Photovoltaikanordnung das Vorhandensein oder Nichtvorhandensein eines Fehlers innerhalb von jedem Solarmodul der Photovoltaikanordnung erfasst;
- ein Trainingsmodul (24), das konfiguriert ist, um abhängig von dem Resultat der Erfassung zwei Gruppen von Solarmodulen zu bilden, umfassend eine erste Gruppe G von gesunden Solarmodulen ohne Fehler und eine zweite Gruppe D von defekten Solarmodulen, wobei die Vorrichtung **gekennzeichnet ist durch**:

- ein erstes Schätzmodul (26), das konfiguriert ist, um für jedes oder alle gesunden Solarmodule der ersten Gruppe die Einstrahlung $G_{geschätzt}$ und die Umgebungstemperatur, die mit dem betrachteten gesunden Solarmodul assoziiert ist, abhängig von Wetter- und/oder Satellitendaten zu schätzen;
- ein zweites Schätzmodul (28), das konfiguriert ist, um die Referenzoberflächentemperatur der Photovoltaikanordnung über ein vorbestimmtes zweidimensionales Polynommodell zu schätzen, dessen zwei Ordnungen, die jeweils mit jeder Richtung der betrachteten Ebene der ebenen Photovoltaikanordnung assoziiert sind, gleichzeitig ein Kriterium für den mittleren quadratischen Fehler minimieren, wobei die gemessene Temperatur von jedem oder allen gesunden Solarmodulen der ersten Gruppe verwendet wird;
- ein Suchmodul (30), das konfiguriert ist, um für jedes oder alle defekten Solarmodule der zweiten Gruppe nach einer vorbestimmten Anzahl $N_{benachbart}$ von benachbarten gesunden Solarmodulen zu suchen, die dem betrachteten defekten Solarmodul in der physischen Entfernung am nächsten sind;
- ein Bestimmungsmodul (32), das konfiguriert ist, um den Leistungsverlust zu bestimmen, der mit dem oder den fehlerhaften Solarmodulen assoziiert ist, indem für jedes oder alle fehlerhafte Solarmodule der zweiten Gruppe D Folgendes verwendet wird:

- die gemessene Temperatur des betrachteten fehlerhaften Solarmoduls;
- die Referenzoberflächentemperatur, die über das vorbestimmte Polynommodell geschätzt wird, das unter Verwendung der gesunden Solarmodule in der Nähe des betrachteten fehlerhaften Solarmoduls erlangt wird;
- die geschätzte Einstrahlung, die mit dem fehlerhaften Solarmodul assoziiert ist, unter Verwendung des/der benachbarten gesunden Solarmodule.

## Claims

1. Method for determining the power loss of a planar photovoltaic assembly comprising one or more strings of photovoltaic modules, each string comprising at least one photovoltaic module, the strings being connected in series and/or in parallel between a positive terminal and a negative terminal, the method being implemented by an electronic device for determining the power loss of a planar photovoltaic assembly, and comprising the following steps, for a current state of said planar photovoltaic assembly:

- detection (42) of the presence or absence of a fault within each photovoltaic module of said photovoltaic assembly;
- depending on the result of said detection, formation (44) of two groups of photovoltaic modules comprising a first group G of fault-free photovoltaic module(s) and a second group D of faulty photovoltaic module(s),
- for each healthy photovoltaic module(s) of said first group G, estimation (46) of the $G_{estimated}$ irradiance and the ambient temperature associated with said healthy photovoltaic module under consideration as a function of meteorological and/or satellite data;
- estimation (48) of the reference surface temperature of said photovoltaic assembly via a predetermined two-dimensional polynomial model, the two orders of which, respectively associated with each direction of the considered plane of said planar photovoltaic assembly, simultaneously minimise a mean square error criterion using the measured temperature of each healthy photovoltaic module(s) of said first group;
- for each faulty photovoltaic module(s) of said second group, search (50) for a predetermined number $N_{neighbour}$ of healthy neighbouring photovoltaic module(s) closest in physical distance to said faulty photovoltaic module under consideration;
- determination (52) of the power loss associated with said faulty photovoltaic module(s) using, for each faulty photovoltaic module(s) of said second group D:

- the measured temperature of the faulty photovoltaic module under consideration;
- the reference surface temperature estimated using said predetermined polynomial model obtained by using said healthy photovoltaic module(s) adjacent to said considered faulty photovoltaic module;
- the estimated irradiance associated with said faulty photovoltaic module using neighbouring healthy photovoltaic module(s).

2. Method according to claim 1, in which the coefficients of the two-dimensional polynomial model are obtained, prior to said estimation (48) of the reference surface temperature, using a polyfit function of the MATLAB® numerical calculation tool.

3. A method according to claim 2, wherein said predetermined two-dimensional polynomial model is defined by the following equation in a Cartesian coordinate space of x-axis and *y*-axis:

$$\text{Polynominal}_{\{M,N\}}(x,y) = \sum_{l=0}^{M}\sum_{k=0}^{N} P_{(l+1,k+1)} y^{M-l} x^{N-k}$$

with *N, M* the orders of the two-dimensional polynomial model respectively along the x-axis and the *y*-axis, $P_{(l+1,k+1)}$ the coefficients of said polynomial model obtained via said polyfit function, the measured temperature $T_G(i,j)$ of each photovoltaic module(s) (i,j) in the Cartesian coordinate space of x-axis and *y*-axis, of said first group G being a point of attachment of said two-dimensional polynomial model according to the following equation:

$$T_G(i,j) = \text{Polynominal}_{\{M N\}}(i,j),$$

the reference surface temperature $T_{Surf}(i,j)$ estimated using said two-dimensional polynomial model, being, for any coordinate module (i,j) of said photovoltaic array such that:

$$T_{Surf}(i,j) = \text{Polynominal}_{\{M N\}}(i,j).$$

4.  A method according to claim 3, wherein said mean square error criterion using the measured temperature $T_G(i,j)$ of each healthy photovoltaic module(s) of said first group G is defined by the following equation:

$$\text{RMSE} = \sqrt{\sum_{i=0}^{I}\sum_{j=0}^{J} \frac{(T_{Surf}(i,j) - T_G(i,j))^2}{Q_G}}$$

with $Q_g$ the number of healthy photovoltaic module(s) of said first group G, I the number of photovoltaic module(s) of said planar photovoltaic assembly along the x-axis and *J* the number of photovoltaic module(s) of said planar photovoltaic assembly along the *y*-axis.

5.  A method according to any one of the preceding claims, wherein a Sandia temperature model is used during the estimation of $G_{estimated}$ irradiance and ambient temperature associated with said healthy photovoltaic module under consideration according to meteorological and/or satellite data.

6.  A method according to any one of the preceding claims, wherein the measured temperature of each healthy photovoltaic module(s) of said first group or the measured temperature of each faulty photovoltaic module(s) of said second group is obtained by thermography.

7.  A method according to any one of the preceding claims, in which the power loss $P_L$ associated with said faulty photovoltaic module(s) is determined according to the following equation, for any faulty *mod* photovoltaic module(s) of said second group D, and for any healthy adjacent module *v*, to said faulty *mod* photovoltaic module under consideration, from among the predetermined number $N_{neighbour}$ resulting from the search step (50):

$$P_L(mod, v) = U_{pv} * A * \frac{T_D(mod) - T_{Surf}(v)}{Pref(v)},$$

with: $T_D$ (*mod*) the measured temperature of said faulty photovoltaic module(s) *mod* under consideration of said second group D,
$U_{pv}$ a predetermined heat exchange coefficient of said modules of said photovoltaic assembly,
*A* the effective surface area of each of said modules of said photovoltaic assembly, and

$$Pref(v) = \frac{G_{estime}}{1000} * P_{mppt}(1 + \alpha * (T_{\text{Surf}}(v) - 25))$$

where $P_{mppt}$ is a power under standard conditions predetermined by the manufacturer of each of the said modules of the said photovoltaic assembly, and $\alpha$ is a temperature-related power loss factor.

8. A method according to claim 7, wherein determining (52) the power loss associated with said faulty photovoltaic module(s) further comprises calculating a power loss median according to the following equation:

$$PL(\text{mod}) = \text{median}\,(PL(\text{mod}, v)).$$

9. A computer program comprising instructions comprising software instructions which, when executed by a computer, implement a method of determining power loss of a planar photovoltaic array in accordance with claims 1 to 8.

10. An electronic device for determining the power loss of a planar photovoltaic assembly comprising one or more strings of photovoltaic modules, each string comprising at least one photovoltaic module, the strings being connected in series and/or in parallel between a positive terminal and a negative terminal, the electronic device for determining the power loss of a planar photovoltaic assembly comprises:

   - a detection module (22) configured to detect, for a current state of said planar photovoltaic assembly, the presence or absence of a fault within each photovoltaic module of said photovoltaic assembly;
   - a forming module (24) configured to form, according to the result of said detection, two groups of photovoltaic modules comprising a first group G of fault-free photovoltaic module(s) and a second group D of faulty photovoltaic module(s), said device being **characterised by**:

      - a first estimation module (26) configured to estimate, for each healthy photovoltaic module(s) of said first group, the $G_{estimated}$ irradiance and the ambient temperature associated with said healthy photovoltaic module in question as a function of meteorological and/or satellite data;
      - a second estimation module (28) configured to estimate the reference surface temperature of the said photovoltaic array using a predetermined two-dimensional polynomial model, the two orders of which, respectively associated with to each direction of the plane considered of said planar photovoltaic array simultaneously minimise a mean square error criterion using the measured temperature of each healthy photovoltaic module(s) of said first group;
      - a search module (30) configured so as, for each faulty photovoltaic module(s) of the said second group, to search for a predetermined number $N_{neighbour}$ of healthy neighbouring photovoltaic module(s) closest in physical distance to the said faulty photovoltaic module under consideration;
      - a determination module (32) configured to determine the power loss associated with said faulty photovoltaic module(s) using, for each faulty photovoltaic module(s) of said second group D:

         - the measured temperature of the faulty photovoltaic module under consideration;
         - the reference surface temperature estimated using said predetermined polynomial model obtained by using said healthy photovoltaic module(s) adjacent to said considered faulty photovoltaic module;
         - the estimated irradiance associated with said faulty photovoltaic module using neighbouring healthy photovoltaic module(s).

FIG.1

T_M$_S$

22  24  36

38

26  28

30  32  34

20

FIG.2

FIG.3

## FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3300249 A1

- EP 3474440 B1

**Littérature non-brevet citée dans la description**

- **D. FAIMAN.** Assessing the Outdoor Operating Température of Photovoltaic Modules. *Prog. Photovolt. Res. Appl.,* Juin 2008, vol. 16, 307-315
- **M. MATTEI et al.** Calculation of the polycrystalline PV module température using a simple method of energy balance. *Renewable Energy,* Avril 2006, vol. 31 (4), 553-67, https://doi.org/10.1016/j.renene.2005.03.010

- **Y. ASSOA ; 2017 et al.** *Thermal analysis of a BIPV system by various modelling approaches*
- **H. GETU et al.** *Computational Fluid Dynamics (CFD) Analysis of Air Based Building Integrated Photovoltaic Thermal (BIPV/T) Systems for Efficient Performance,* 2014